# DEMANDE DE BREVET EUROPEEN

(11) **EP 0 814 291 A1**
(43) Date de publication de la demande: **29.12.1997**
(21) Numéro de dépôt: 97401355.9
(22) Date de dépôt: 16.06.1997
(51) Int. Cl.: F16L 11/24

(54) **Tuyau étanche aux liquides**

(30) Priorité: 18.06.1996 FR 9607522
(71) Demandeur: WESTAFLEX-AUTOMOBILE, 59058 Roubaix Cedex 1 (FR)
(72) Inventeur: Lepoutre, Henri, 59058 Roubaix Cedex 1 (FR)
(74) Mandataire: Coutel, Jean-Claude

(57) **Abrégé**

Tuyau étanche aux liquides pour le transport de fluides gazeux, notamment dans les véhicules automobiles, comportant au moins une première bande (1) enroulée sur elle-même en hélice, caractérisé en ce que cette première bande est poreuse et perméable aux fluides gazeux et en ce qu'il comporte une seconde bande mince (3), perméable aux fluides gazeux et étanche aux liquides, également enroulée sur elle-même en hélice, avec recouvrement ou chevauchement partiel de ses spires, lesdites spires étant solidarisées entre elles de manière étanche pour que la seconde bande (3) définisse un revêtement continu étanche aux liquides.

## Description

La présente invention est relative aux tuyaux qui sont étanches aux liquides et qui sont du type comportant au moins une première bande enroulée sur elle-même en hélice.

L'invention s'applique en particulier, mais non exclusivement, à de tels tuyaux qui sont souples et qui sont destinés au transport de fluides gazeux, notamment dans les automobiles pour le transport d'air dans le moteur ou l'habitacle. Dans cette application, les tuyaux, tout en étant étanches aux liquides, sont poreux pour permettre le passage de gaz, de façon à atténuer la transmission des bruits.

Par le document FR-A-2.720.471, on connait un tuyau en matière fibreuse pour le transport de fluides gazeux, comportant au moins une bande fibreuse en matière thermofusible qui est enroulée sur elle-même en hélice, un fil de renfort pouvant être interposé entre les spires en chevauchement. Ce document ne se refère nullement à une éventuelle étanchéité aux liquides.

Par le document DE-A-1.525.785, on connait un tuyau souple constitué par une bande en matière élastomère enroulée en hélice sur elle-même. Les spires de l'hélice peuvent être jointes, par exemple par soudage, par agrafage ou par collage. Mis à part le cas de l'agrafage, qui n'assure pas une liaison imperméable, il semble que ce tuyau puisse être considéré comme étanche aux liquides ; en revanche, ce tuyau n'est pas perméable aux gaz et il comporte une bande unique.

L'invention a pour but de fournir un tuyau étanche aux liquides d'une conception nouvelle, simple, fiable et économique.

A cet effet, le tuyau selon l'invention, qui est étanche aux liquides, qui est destiné au transport de fluides gazeux, notamment dans les véhicules automobiles, et qui comporte au moins une première bande enroulée sur elle-même en hélice, se particularise, comme spécifié dans la partie caractérisante de la Revendication 1, en ce que cette première bande est poreuse et perméable aux fluides gazeux et en ce qu'il comporte une seconde bande mince, perméable aux fluides gazeux et étanche aux liquides, également enroulée sur elle-même en hélice, avec recouvrement ou chevauchement partiel de ses spires, lesdites spires étant solidarisées entre elles de manière étanche pour que la seconde bande définisse un revêtement continu étanche aux liquides.

De préférence, et en particulier dans l'application ci-dessus à l'industrie automobile, la seconde bande définit un revêtement extérieur pour le tuyau. Toutefois, pour certaines applications, il n'est pas exclu de prévoir un tel revêtement sur la surface intérieure du tuyau.

Par exemple, la seconde bande est assujettie sur elle-même par collage ou par soudage, et elle est solidarisée sur une partie au moins de sa largeur avec la première bande, également notamment par collage ou par soudage.

De préférence, la seconde bande est en une matière qui appartient au groupe constitué par le polypropylène, le polyester et le polyéthylène.

Dans une réalisation particulière, la première bande est enroulée sur elle-même avec recouvrement ou chevauchement partiel de ses spires, et une zone marginale longitudinale de la seconde bande est située entre les parties de spires en chevauchement de la première bande.

Pour des raisons de simplicité de fabrication du tuyau, la première et la seconde bandes sont de préférence solidarisées entre elles avant l'enroulement en hélice.

Dans le cas particulier ci-dessus où le tuyau doit être perméable aux gaz, la première bande est en une matière poreuse, notamment fibreuse, et la seconde bande présente des petites perforations, d'un diamètre par exemple de l'ordre de 0,1 mm, qui permettent le passage de gaz et interdisent le passage de liquides.

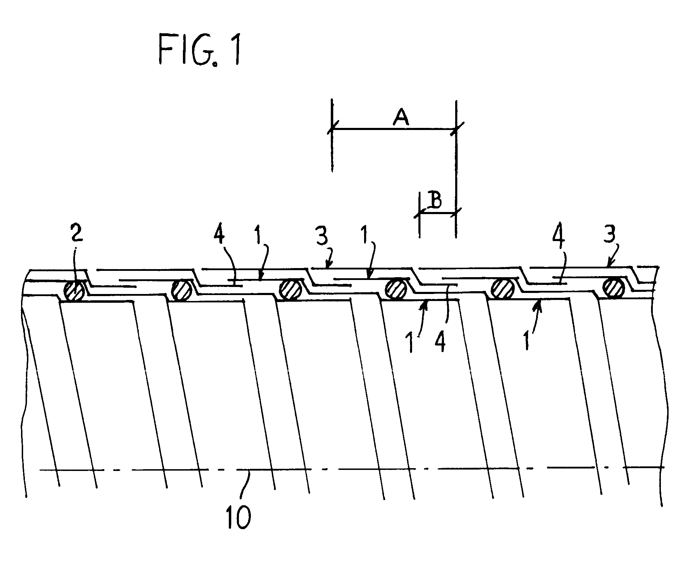

On comprendra bien l'invention à la lecture du complément de description qui va suivre et en référence au dessin annexé qui fait partie de la description et dont la Figure unique est une coupe axiale schématique d'une partie d'un tuyau établi selon un mode de réalisation préféré de l'invention.

On a représenté partiellement et schématiquement sur le dessin une partie d'un tuyau établi selon l'invention.

Par exemple, ce tuyau est souple, et il est destiné à l'industrie automobile, pour le transport de fluides gazeux, en général de l'air, dans les moteurs ou les habitacles d'automobiles.

Le tuyau représenté comporte une première bande 1 qui est enroulée sur elle-même en hélice autour d'un axe 10, avec recouvrement ou chevauchement partiel de ses spires, comme montré en A. Le cas échéant, un fil de renfort 2, métallique ou en matière plastique, est interposé entre les parties de spires en chevauchement de la bande 1, de façon connue.

Conformément à l'invention, le tuyau ci-dessus comporte également une seconde bande 3 qui est mince et qui est constituée en une matière étanche aux liquides. La seconde bande 3 est également enroulée sur elle-même en hélice autour de l'axe 10, avec recouvrement ou chevauchement partiel de ses spires, comme montré en B. Les spires de la bande 3 sont solidarisées entre elles, dans la zone de chevauchement, de manière étanche pour que cette bande définisse un revêtement continu qui est étanche aux liquides. Dans l'exemple représenté, la bande 3 définit un revêtement extérieur pour le tuyau.

La bande 3 est en une matière appartenant au groupe constitué par le polypropylène, le polyester et le polyéthylène, avec une préférence pour le polypropylène car cette matière, qui présente un point de fusion de 120° C, permet un soudage de la bande 3 sur elle-même lors du passage final du tuyau dans un four chauffé à environ 150-170° C. Toutefois, ce soudage de la bande 3 sur elle-même pourrait être remplacé par un collage.

Dans l'exemple représenté, la seconde bande 3 est de largeur inférieure à celle de la bande 1 et elle comporte une zone marginale longitudinale 4, de faible largeur, par exemple de l'ordre de 2 mm, qui est située entre les parties des spires en chevauchement de la première bande 1. Dans ce cas, la bande 3, avant l'enroulement des deux bandes, est solidarisée, sur une partie au moins de sa largeur, par exemple par collage ou par soudage, avec la première bande 1, l'enroulement se faisant alors en délivrant une bande à deux épaisseurs.

Dans l'application particulière ci-dessus à l'industrie automobile, dans laquelle le tuyau est destiné au transport de fluides gazeux, le tuyau est en général poreux pour permettre le passage des gaz tout en interdisant le passage des liquides. Pour cela, la première bande 1 est en une matière poreuse, par exemple fibreuse, et la seconde bande 3 est rendue également poreuse par la création de petites perforations qui assurent à la fois la porosité et l'étanchéité aux liquides. Par exemple, ces perforations ont un diamètre de l'ordre de 0,1 mm. Ces perforations peuvent être réalisées lors de la fabrication de la bande 3 ou bien, de préférence, lors de l'assujettissement de la bande 3 à la bande 1, préalablement à l'enroulement, à l'aide d'un calandrage. Ce calandrage permet au surplus une liaison intime entre les deux bandes.

## Revendications

1. Tuyau étanche aux liquides pour le transport de fluides gazeux, notamment dans les véhicules automobiles, comportant au moins une première bande (1) enroulée sur elle-même en hélice, caractérisé en ce que cette première bande est poreuse et perméable aux fluides gazeux et en ce qu'il comporte une seconde bande mince (3), perméable aux fluides gazeux et étanche aux liquides, également enroulée sur elle-même en hélice, avec recouvrement ou chevauchement partiel de ses spires, lesdites spires étant solidarisées entre elles de manière étanche pour que la seconde bande (3) définisse un revêtement continu étanche aux liquides.

2. Tuyau selon la revendication 1, caractérisé en ce que la seconde bande (3) définit un revêtement extérieur pour le tuyau.

3. Tuyau selon l'une des revendications 1 et 2, caractérisé en ce que la seconde bande (3) est assujettie sur elle-même par collage ou par soudage.

4. Tuyau selon l'une des revendications 1 à 3, caractérisé en ce que la seconde bande (3) est solidarisée sur une partie au moins de sa largeur avec la première bande (1), notamment par collage ou par soudage.

5. Tuyau selon l'une des revendications 1 à 4, caractérisé en ce que la matière de la seconde bande appartient au groupe constitué par le polypropylène, le polyester et le polyéthylène.

6. Tuyau selon l'une des revendications 1 à 5, caractérisé en ce que la première bande (1) est enroulée sur elle-même avec recouvrement ou chevauchement partiel de ses spires, et une zone marginale longitudinale (4) de la seconde bande (3) est située entre les parties de spires en chevauchement de la première bande (1).

7. Tuyau selon l'une des revendications 1 à 6, caractérisé en ce que les première et seconde bandes sont solidarisées entre elles avant l'enroulement en hélice.

8. Tuyau selon l'une des revendications 1 à 7, caractérisé en ce que la première bande (1) est en une matière fibreuse, et la seconde bande (3) présente des petites perforations permettant le passage de gaz et interdisant le passage de liquides.

9. Tuyau selon la revendication 8, caractérisé en ce que les perforations ont un diamètre de l'ordre de 0,1 mm.

10. Tuyau selon l'une des revendications 1 à 9, caractérisé en ce qu'un fil de renfort (2) en hélice est disposé entre les parties de spires en chevauchement de la première bande (1).
